Europäisches Patentamt

European Patent Office

Office européen des brevets

(19)

(11) Numéro de publication : **0 452 191 A1**

## (12) DEMANDE DE BREVET EUROPEEN

(21) Numéro de dépôt : **91400903.0**

(51) Int. Cl.⁵ : **B01D 46/24**

(22) Date de dépôt : **03.04.91**

(30) Priorité : **09.04.90 FR 9004958**

(43) Date de publication de la demande :
**16.10.91 Bulletin 91/42**

(84) Etats contractants désignés :
**AT BE CH DE ES GB IT LI LU NL**

(71) Demandeur : **ETABLISSEMENTS NEU (S.A.)**
**70, Rue du Collège, SP No 801**
**F-59708 Marcq en Baroeul (FR)**

(72) Inventeur : **Andre, Joseph**
**6, rue Clémenceau, Bachy**
**F-59830 Cysoing (FR)**

(74) Mandataire : **Descourtieux, Philippe et al**
**CABINET BEAU de LOMENIE 55 rue**
**d'Amsterdam**
**F-75008 Paris (FR)**

(54) **Dépoussiéreur à élément filtrant rigide et à décolmatage par soufflage à contre-courant à l'aide de tuyère.**

(57)     Dans le dépoussiéreur à élément filtrant rigide (5), le dispositif de décolmatage par soufflage d'air comprimé à contre-courant comporte au moins une tuyère (16) dont l'extrémité inférieure (20) débouche dans l'ouverture d'un élément filtrant (5), de préférence un canal modulaire (11) de l'élément filtrant (5) , et dont l'extrémité supérieure (17) de forme conique convergente , est centrée sur l'axe de symétrie de l'orifice (10) de soufflage et placée à distance dudit orifice (10).
     Avantageusement toutes les tuyères (16) d'un même élément filtrant (5) sont réalisées sous la forme d'une pièce monobloc.

EP 0 452 191 A1

_fig.3_

La présente invention concerne un dépoussiéreur dans lequel l'élément filtrant est réalisé dans un matériau rigide, équipé d'un dispositif de décolmatage par soufflage d'air comprimé à contre-courant.

De manière générale, on appelle dans le présent texte, dépoussiéreur tout dispositif destiné à séparer d'un fluide des substances de densité différente, notamment des particules de poussière de l'air ambiant.

Des dépoussiéreurs dont l'élément filtrant est réalisé dans un matériau rigide sont bien connus, en particulier par les documents FR.A.2.417.327 et WO 85/04595. Grâce à la rigidité du matériau poreux assurant la filtration, il est possible de donner une forme complexe à l'élément filtrant en sorte d'augmenter la surface de filtration. Dans ce type de dépoussiéreur, les particules de poussière sont arrêtées en surface de l'élément filtrant et non dans toute l'épaisseur de l'élément filtrant comme cela se produit dans les dépoussiéreurs classiques à élément filtrant souple, en tissu ou en feutre aiguilleté.

En ce qui concerne le décolmatage de l'élément filtrant rigide, on utilise l'action à jet d'air comprimé à contre-courant pour décoller la couche de poussière qui s'est accumulée à la surface de l'élément filtrant. Pour qu'un tel décollement puisse se produire, la pression de l'air soufflé à l'intérieur de l'élément filtrant doit être suffisante pour compenser la perte de charde due au passage à travers le matériau poreux constitutif de l'élément filtrant, la perte de charge due à la présence de la couche de poussière en surface de l'élément filtrant, la pression exercée par l'air en cours de filtration sur la couche de poussière et enfin pour vaincre les forces d'adhésion de la couche de poussière sur la surface de l'élément filtrant.

Dans les documents précités, le décolmatage s'effectue par jet direct d'air comprimé, depuis une bride de soufflage vers l'ouverture de l'élément filtrant.

Cependant, le demandeur a constaté qu'avec l'injection directe d'air soit le décolmatage n'était pas toujours total soit il était nécessaire de procéder à des injections d'air plus fréquentes.

Le but que s'est fixé le demandeur est de proposer un dépoussiéreur à élément filtrant rigide et à décolmatage par soufflage d'air à contre-courant qui pallie les inconvénients précités, en ce que le dispositif de décolmatage assure un décollement efficace de la couche de poussière sans augmentation de la fréquence du cycle de décolmatage.

Ce but est atteint par le dépoussiéreur de l'invention qui est caractérisé en ce que le dispositif de décolmatage comporte au moins une tuyère dont l'extrémité inférieure débouche dans l'ouverture de l'élément filtrant et dont l'extrémité supérieure, de forme conique convergente, est centrée sur l'axe de symétrie de l'orifice de soufflage et placée à distance dudit orifice, ladite tuyère étant apte à augmenter la pression de l'air à l'intérieur de l'élément filtrant.

On a déjà utilisé des tuyères dans le décolmatage d'élément filtrant souple. Cependant, dans ce cas l'air injecté à contre-courant a pour effet d'interrompre le courant d'air à filtrer, de déformer l'élément filtrant en le gonflant et d'impliquer un certain mouvement aux poussières ayant pénétré dans la masse de l'élément filtrant. Le détachement des poussières accumulées sur la face externe de l'élément filtrant est obtenu par l'effet d'accélération lors du gonflage et de décélération en fin de gonflage grâce à un débit instantané élevé de l'air soufflé à l'intérieur de l'élément filtrant.

Ainsi, dans le décolmatage d'élément filtrant souple, la tuyère, qui a une section allant en diminuant jusqu'à une section minimale dite col de la tuyère puis éventuellement en augmentant, a pour fonction d'obtenir un débit instantané élevé, permettant d'atteindre une déformation rapide de l'élément filtrant.

Comme on l'a vu précédemment, dans le cas où l'élément filtrant est rigide et où il n'est plus question d'action de décolmatage due à la déformation rapide, c'est a pression de l'air à l'intérieur de l'élément filtrant qui est recherchée.

Le mérite en revient au demandeur d'avoir, par des essais comparatifs, trouvé que l'effet tuyère utilisé, jusqu'à présent dans le décolmatage d'élément filtrant souple pour l'obtention de débits instantanés élevés pouvait être mis en oeuvre dans le décolmatage d'élément filtrant rigide pour augmenter la pression de l'air à l'intérieur de l'élément filtrant.

Comparativement à l'injection directe de l'air comprimé dans l'ouverture de l'élément filtrant, il a de plus été trouvé que la pression était, à débit d'air égal, très sensiblement augmentée lorsque certaines conditions étaint respectées. Premièrement, le rapport de diamètre de l'orifice le soufflage au diamètre intérieur du col de la tuyère est compris entre 0,1 et 0,2. Deuxièmement, la distance entre le bord supérieur de la tuyère et l'orifice de soufflage est comprise entre 60 et 100mm.

Lorsque les conditions précitées sont réunies, l'augmentation de pression, à débit d'air égal, est au moins de 30%.

Le meilleur résultat a été obtenu avec un rapport de diamètre égal à 0,16 et une distance de 85mm. L'augmentation de pression était de l'ordre de 50%.

La forme préférée de la tuyère est biconique, avec l'extrémité supérieure convergente, la partie centrale cylindrique et l'extrémité inférieure divergente.

Selon un mode particulièrement avantageux de réalisation de l'invention, un élément filtrant étant constitué d'un ensemble de modules juxtaposés, le dispositif de décolmatage comporte une pluralité de tuyères, autant de tuyères que de modules, réalisées sous forme d'un bloc rigide.

Cette disposition particulière de l'ensemble de tuyères d'une succession de modules juxtaposés en un seul bloc rigide permet une fabrication économique par fonderie ou thermoformage par exemple et également une mise en place rapide, puisqu'il suffit de positionner ledit bloc au-dessus de l'ensemble des modules constituant un élément filtrant.

Cette disposition des tuyères en bloc rigide peut prendre deux versions différentes qui présentent toutes deux certains avantages.

Selon la première version, le bloc rigide formant tuyères est solidaire de la plaque de séparation entre le caisson d'air à épurer et le caisson d'air épuré. Par exemple, le bloc est fixé au-dessus de ladite plaque de séparation, tandis que l'élément filtrant est fixé au-dessous de celle-ci. Par sa rigidité, le bloc tuyères fait office de raidisseur, et empêche la déformation éventuelle de la plaque de séparation, due à la différence de pression régnant entre les deux caissons, et par conséquent réduit les risques de passage de poussière du caisson d'air non épuré vers le caisson d'air épuré.

Selon une seconde version, le bloc rigide formant tuyères est solidaire de l'élément filtrant : en particulier il est obtenu par moulage direct de la partie supérieure de l'élément filtrant. Dans ce cas les tuyères sont intégrées dans l'élément filtrant, et le montage du dépoussiéreur en est facilité.

D'autres caractéristiques et avantages de l'invention apparaîtront plus clairement à la lecture de la description qui va être faite d'un exemple de dépoussiéreur à élément filtrant rigide et à décolmatage par soufflage à contre-courant à l'aide de tuyère, illustré par le dessin annexé dans lequel :

La figure 1 est une vue partielle de côté de l'intérieur du dépoussiéreur,

La figure 2 est une vue partielle en coupe du dépoussiéreur,

La figure 3 est une vue schématique en perspective du dispositif de décolmatage.

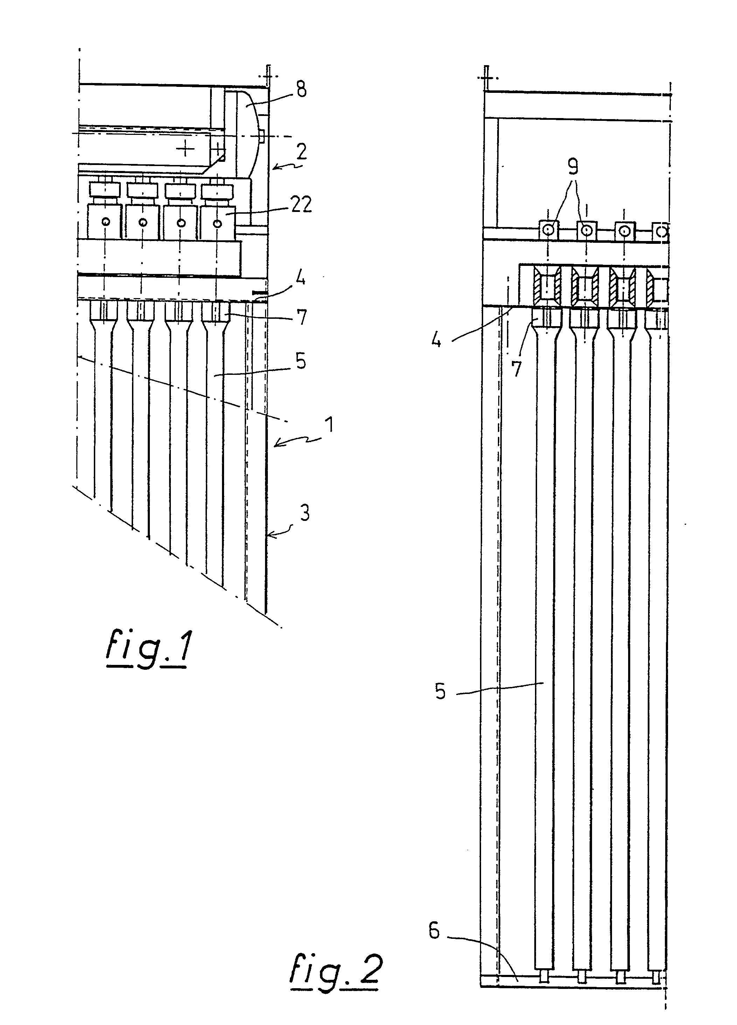

Le dépoussiéreur 1 comporte deux caissons 2,3 délimités par une plaque 4 de séparation. Le caisson inférieur 3 sur les figures 1 et 2 contient les éléments filtrants 5, alignés sous forme de rangées parallèles. Chaque élément filtrant 5 est fixé d'une part à la partie basse 6 du caisson 3 et d'autre part à la plaque de séparation 4 par l'intermédiaire d'un bloc de raccordement 7. Le caisson inférieur 3 est parcouru par l'air à épurer qui y pénètre par une ouverture non représentée.

Le caisson supérieur 2 correspond au circuit d'air épuré; il contient aussi le dispositif de décolmatage qui comprend un réservoir 8 d'air comprimé, autant de rampes de soufflage 9 qu'il y a d'éléments filtrants 5, lesdites rampes 9 étant reliées au réservoir 8 par l'intermédiaire de vannes 22.

Chaque rampe de soufflage 9 est percée d'orifices de soufflage 10 dirigés verticalement vers la plaque 4 de séparation.

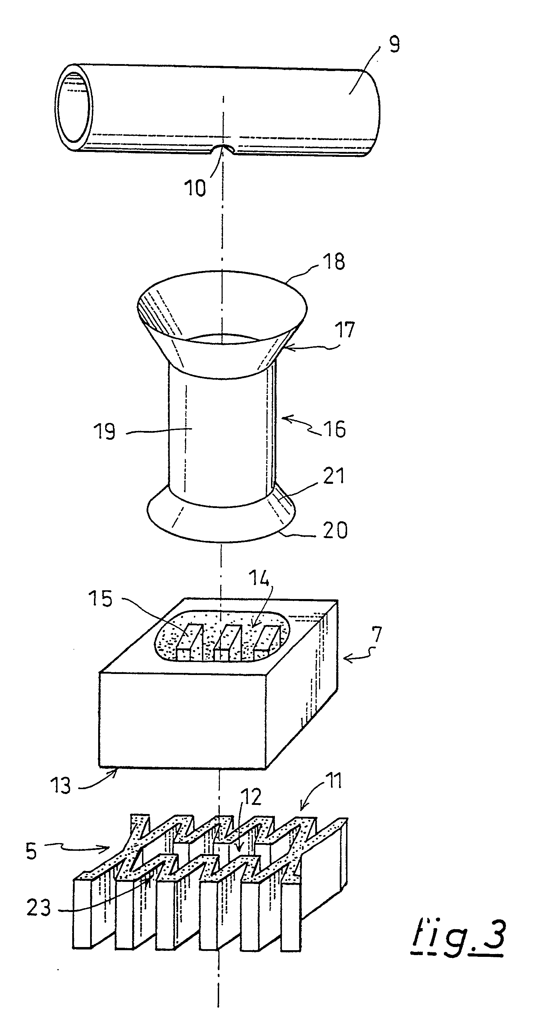

Dans l'exemple illustré à la figure 3, chaque élément filtrant 5 est constitué d'une juxtaposition de canaux modulaires 11 dont la section intérieure a la forme de quatre losanges 12 attenants, conformément à l'enseignement du document WO85/04595. Le bloc de raccordement 7 correspondant à un canal 11 a la forme d'un parallélépipède rectangle en partie évidé ; son ouverture inférieure 13 (non visible sur la figure 3 ) a la même forme que celle de la section de l'ouverture supérieure du canal 11 correspondant, son ouverture supérieure 14, a une forme oblongue et recouvre globalement la périphérie extérieure du canal 11. On comprend que la partie évidée du bloc de raccordement 7 réalise le passage progressif de la forme oblongue de l'ouverture inférieure 13. En particulier dans cette partie évidée sont prévus des épaulements 23 correspondant au prolongement des zones de séparation 16 des losanges 12.

Au-dessus du bloc de raccordement 7 d'un canal modulaire 11 est montée une tuyère 16 qui comporte trois parties. La partie supérieure 17 est conique, de forme convergente, c'est-à-dire ayant une section qui va en se rétrécissant, par exemple selon un angle compris entre 15° et 30°, depuis le bord supérieur 18 jusqu'à la partie centrale 19 cylindrique. La partie inférieure 21 est conique de forme divergente, c'est-à-dire ayant une section qui va en s'élargissant depuis la partie centrale 19 cylindrique jusqu'au bord inférieur 20, par exemple selon un angle compris entre 15° et 30°.

Au niveau du bord inférieur 20, la tuyère 16 s'applique directement ou par un joint d'étanchéité au-dessus de l'ouverture oblongue 14 du bloc de raccordement 7.

Dans des exemples de réalisation, la hauteur totale de la tuyère 16 était comprise entre 80 et 120mm. La section d'entrée, c'est-à-dire la section de la tuyère 16 prise au niveau du bord supérieur 18, était de 2 à 3 fois la section du col, c'est-à-dire la section prise au niveau de la partie cylindrique 19. La partie supérieure 17 représentait de 20 à 35% de la hauteur totale de la tuyère 16.

La rampe de soufflage 9 est placée au-dessus de la tuyère 16, dans le sens longitudinal de l'élément filtrait 5, de telle sorte qu'un orifice de soufflage 10 soit centré sur l'axe de symétrie de la tuyère 16. La distance entre l'orifice 10 et le bord supérieur 18 de la tuyère 16 est comprise entre 60 et 100mm.

L'orifice de soufflage est circulaire et a un diamètre donné qui est dans un rapport de 0,1 à 0,2 par rapport au diamètre intérieur du col de la tuyère 16, c'est-à-dire de la partie centrale cylindrique 19.

Dans un exemple préféré de réalisation, la distance entre l'orifice 10 et le bord supérieur 18 était de 85mm, tandis que le rapport précité des diamètres était de 0,16.

Les essais menés à partir de ce mode préféré de réalisation ont permis de constater que la pression créée dans le canal 11 modulaire par l'air de soufflage passant par la tuyère 16 était supérieure de près de 50% à la pression créée dans des conditions habituelles par injection directe sans tuyère 16, pour un même débit d'air de soufflage.

Il revient à l'homme du métier de déterminer les paramètres de l'installation en fonction des conditions de fonctionnement. En particulier le volume du réservoir d'air comprimé 8 doit être suffisant pour qu'il n'y ait pas de chute de pression significative dans les rampes de soufflage 9 lors de l'opération de décolmatage. Il sera tenu compte du nombre de rampes 9, du nombre d'orifices 10 par rampe 9, de la section des orifices 10, de la durée d'ouverture des vannes 10 et de la pression initiale de l'air comprimé dans le réservoir. Les vannes 22 sont des vannes à membranes qui sont dimensionnées en fonction de la surface totale des éléments filtrants 5 à nettoyer. La section de passage d'une vanne 22 alimentant en air comprimé une rampe 9 donnée sera supérieure à la somme des sections des orifices 10 de cette même rampe de sorte d'obtenir un écoulement d'air au niveau de ces orifices à la vitesse du son. De plus la somme des sections des orifices 10 d'une même rampe 9 sera sensiblement inférieure à la section transversale de ladite rampe 9, de manière à obtenir une bonne répartition des débits d'air.

En ce qui concerne la tuyère 10, sa forme n'est pas limitée à celle qui a été décrite ci-dessus. Par exemple la partie centrale cylindrique peut être inexistante ; dans ce cas le col 19 de la tuyère est le rétrécissement entre les parties convergentes et divergentes. Par exemple la partie inférieure divergente peut être inexistante ; dans ce cas c'est la partie cylindrique qui s'applique au-dessus du bloc de raccordement.

Dans le cas de pluralités de canaux 11 juxtaposées pour former un même élément filtrant 5, on met en oeuvre de préférence une tuyère 16 par canal 11. Dans ce cas, il est avantageux que toutes les tuyères correspondant à un même élément 5 soient réalisées sous la forme d'un ensemble monobloc. Cette réalisation est d'une fabrication économique, par fonderie , thermoformage ou autre méthode ; de plus le bloc-tuyère étant conformé aux dimensions de l'élément filtrant, la mise en place de toutes les tuyères d'un élément filtrant se fait par installation d'un seul bloc-tuyère et s'en trouve facilitée.

Le bloc tuyère peut être fixé sur la plaque 4 de séparation entre les deux caissons 2,3. Par sa rigidité, il constitue un raidisseur et empêche la déformation de la plaque de séparation, réduisant ainsi les risques de passage de poussières du caisson d'air à épurer 3 vers le caisson d'air épuré 2 ; cette déformation de la plaque 4 peut se produire du fait de la différence de pression entre les deux caissons.

Selon une autre version , le bloc-tuyère pourrait être rendu solidaire de l'élément filtrant, soit par moulage direct, soit par tout mode adapté en fixation.

L'invention n'est pas limitée au mode de réalisation qui a été décrit ci-dessus à titre d'exemple, mais en couvre toutes les variantes.

## Revendications

1. Dépoussiéreur (1) à éléments filtrants rigides (5) comportant un dispositif de décolmatage par soufflage d'air comprimé à contre-courant caractérisé en ce que ledit dispositif de décolmatage comporte au moins une tuyère (16) dont l'extrémité inférieure débouche dans l'ouverture d'un élément filtrant et dont l'extrémité supérieure, de forme conique convergente , est centrée sur l'axe de symétrie de l'orifice (10) de soufflage et placée à distance dudit orifice (10), ladite tuyère étant apte à augmenter la pression de l'air à l'intérieur de l'élément filtrant.

2. Dépoussiéreur selon la revendication 1 caractérisé en ce que le rapport du diamètre de l'orifice (10) de soufflage au diamètre intérieur du col (19) de la tuyère (16) est compris entre 0,1 et 0,2.

3. Dépoussiéreur selon la revendication 1 caractérisé en ce que la distance entre le bord supérieur (18) de la tuyère (16) et l'orifice de soufflage (10) est comprise entre 60 et 100mm.

4. Dépoussiéreur selon les revendications 2 et 3 caractérisé en ce que le rapport du diamètre de l'orifice (10) ce soufflage au diamètre intérieur du col (19) de la tuyère (16) est d'environ 0,16 et en ce que la distance entre le bord supérieur (18) de la tuyère (16) et l'orifice de soufflage (10) est d'environ 85mm.

5. Dépoussiéreur selon la revendication 1 caractérisé en ce que la tuyère (16) a une forme biconique , avec l'extrémité supérieure convergente (17), la partie centrale (19) cylindrique et l'extrémité inférieure (21) divergente.

6. Dépoussiéreur selon la revendication 1 caractérisé en ce que le dispositif de décolmatage comporte une pluralité de tuyères réalisées sous forme d'un bloc rigide.

7. Dépoussiéreur selon la revendication 6 caractérisé en ce que le bloc de tuyères est solidaire de la plaque de séparation (4) entre le caisson d'air à épurer (3) et le caisson d'air épuré (2).

8. Dispositif selon la revendication 6 caractérisé en ce que le bloc de tuyères est solidaire ou incorporé dans l'élément filtrant.

_fig.1_

_fig.2_

fig.3

Office européen
des brevets

# RAPPORT DE RECHERCHE EUROPEENNE

Numero de la demande

EP 91 40 0903

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int. Cl.5) |
|---|---|---|---|
| A | PATENT ABSTRACTS OF JAPAN vol. 4, no. 98 (C-18)(580) 15 juillet 1980, & JP-A-55 61911 (NIPPON GAISHI K.K.) 10 mai 1980, * le document en entier * --- | 1, 5-8 | B01D46/24 |
| A | PATENT ABSTRACTS OF JAPAN vol. 10, no. 182 (C-356)(2238) 25 juin 1986, & JP-A-61 28416 (GOTO SHOJI K.K.) 8 février 1986, * le document en entier * --- | 1, 6 | |
| A | AU-D-45053/72 (DAVIS INDUSTRIAL LTD.) * revendication 1; figure 6 * --- | 1 | |
| A,D | FR-A-2417327 (HERDING GMBH ENTSTAUBUNGSANLAGEN) * revendication 1; figures 1, 2 * ------ | 1 | |

| | | | DOMAINES TECHNIQUES RECHERCHES (Int. Cl.5) |
|---|---|---|---|
| | | | B01D |

Le présent rapport a été établi pour toutes les revendications

| Lieu de la recherche | Date d'achèvement de la recherche | Examinateur |
|---|---|---|
| BERLIN | 28 MAI 1991 | BERTRAM H.E.H. |